# EUROPÄISCHE PATENTSCHRIFT

(11) **EP 0 813 658 B1**
(45) Veröffentlichungstag und Bekanntmachung des Hinweises auf die Patenterteilung: **16.05.2001**
(21) Anmeldenummer: 96901706.0
(22) Anmeldetag: 01.02.1996
(51) Int. Cl.: F16F 15/173, B29C 70/00

(54) **VISKOSITÄTS-DREHSCHWINGUNGSDÄMPFER**
VISCOSITY-TYPE TORSIONAL-VIBRATION DAMPER
AMORTISSEUR VISQUEUX DE VIBRATIONS TORSIONNELLES

(30) Priorität: 03.03.1995 DE 19507519
(43) Veröffentlichungstag der Anmeldung: 29.12.1997
(73) Patentinhaber: HASSE & WREDE GmbH, D-12347 Berlin (DE)
(72) Erfinder: SANDIG, Jörg, D-10115 Berlin (DE)
(74) Vertreter: Specht, Peter, Dipl.-Phys.
(86) Internationale Anmeldenummer: DE9600190
(87) Internationale Veröffentlichungsnummer: WO9627748

(56) Entgegenhaltungen:
- EP-A- 0 503 424
- DE-A- 2 130 089
- DE-A- 3 815 505
- FR-A- 2 532 387
- GB-A- 650 891
- US-A- 3 166 356
- US-A- 3 264 898
- US-A- 3 448 830
- US-A- 3 716 901
- US-A- 3 913 980
- US-A- 5 142 936

## Beschreibung

Die Erfindung betrifft einen Viskositäts-Drehschwingungs- dämpfer und ein Verfahren zur Herstellung eines Viskositäts-Drehschwingungsdämpfers nach den Oberbegriffen der Ansprüche 1 und 9.

Viskositäts-Drehschwingungsdämpfer sind seit langem in den verschiedensten Ausführungsformen bekannt. Der Viskositäts-Drehschwingungsdämpfer ist ein Maschinenelement, welches vorzugsweise am Kurbelwellenende von Verbrennungskraftmaschinen zum Zwecke der Begrenzung von Torsionsbeanspruchungen, die durch die oszillierenden Gas- und Massenkräfte in der Kurbelwelle entstehen, angebracht wird.

Für die Funktion des Drehschwingungsdämpfers sind das Massenträgheitsmoment des seismischen Ringes, die Spaltgeometrie sowie die Viskosität des Dämpfungsmittels relevant. Das Gehäuse hat die Aufgabe, den seismischen Ring über Lagerflächen zu führen und das Dämpfungsmittel aufzunehmen.

Da das Gehäuse starr mit der Kurbelwelle verbunden ist, bewirkt es durch seine Masse eine Absenkung der Eigenschwingungsfrequenz des Massensystems.

Das kann dazu führen, das Resonanzschwingungen niedrigerer Ordnungszahlen in den Betriebsdrehzahlbereich gelangen. Prinzipiell ist für das Schwingungssystem ein möglichst leichtes Gehäuse vorteilhaft, zumal der zu bedämpfende Gehäuseanteil in die verfügbare Dämpferleistung eingeht.

Entsprechend des Standes der Technik werden als Material für das Gehäuse metallische Werkstoffe, vorzugsweise Stahl oder Guß verwendet. Ansätze zum Einsatz von unelastischen Kunststoffen konnten sich nicht durchsetzen und wurden nach kürzester Zeit nicht mehr weiterverfolgt (siehe die gattungsbildende DE OS 2130089).

Aufgrund der gestiegenen Leistung von Verbrennungskraftmaschinen und aus akustischen Gründen werden auch im Nutzfahrzeug- und Personenwagenbereich zunehmend Elemente zur Begrenzung der Torsionsbeanspruchung der Kurbelwelle eingesetzt. Aus Kostengründen wurden in dieser Leistungsklasse vorwiegend Gummitilger verwendet, obwohl der Viskositäts-Drehschwingungsdämpfer leistungsfähiger ist. Das Konstruktionsprinzip des Viskodämpfers verlangt bisher im Vergleich zum Gummitilger mehr Einzelteile und einen höheren Montageaufwand.

Die Erfindung zielt darauf ab, einen Viskositäts-Drehschwingungsdämpfer zu schaffen, der auch bei Motoren geringerer Leistung kostengünstig einsetz- und herstellbar ist.

Die Erfindung erreicht dieses Ziel durch die Gegenstände der Ansprüche 1 und 9. Vorteilhafte Varianten der Erfindung sind in den Unteransprüchen angegeben.

Im Gegensatz zum Stand der Technik schlägt die Erfindung den Einsatz thermoplastischer Kunststoffe vor. Bisher wurde dem Einsatz dieser Kunststoffe offenbar nicht für möglich gehalten, da die Auffassung bestand, daß ein Kunststoff die Anforderungen an Festigkeit, die Wärmedurchlässigkeit und -beständigkeit sowie die chemische Beständigkeit gegenüber dem Dämpfungsmittel nicht erfüllt. Desweiteren waren keine geeigneten Verfahren für eine wirtschaftliche Fertigung bekannt. Die Erfindung wiederlegt dieses Vorurteil. Sie senkt ferner die Anzahl der Einzelteile und den Fertigungsaufwand.

Bei der Verwendung eines thermoplastischen gleitfähigen Kunststoffgehäuses sind für die Führung des Schwungringes keine zusätzlichen Lagerelemente notwendig. Desweiteren sinkt der Bearbeitungsaufwand für die Einzelteile, da keine spanende Bearbeitung notwendig wird. Die geringere Dichte von Kunststoff führt zu einer erheblichen Gewichtsersparnis. Im Hinblick auf das akustische Verhalten zeigt ein Kunststoffgehäuse bessere Dämpfungseigenschaften als ein metallisches Gehäuse.

Neben der einteiligen Variante ist es besonders vorteilhaft, den Viskositäts-Drehschwingungsdämpfer zwei- oder mehrteilig auszubilden.

Nachfolgend wird die Erfindung anhand von Ausführungsbeispielen unter Bezug auf die Zeichnung näher erläutert. Es zeigen:
- Fig. 1 bis 6 und 12: Varianten der Erfindung mit einteiligen Gehäusen;
- Fig. 7 bis 11: Varianten der Erfindung mit zweiteiligen Gehäusen.

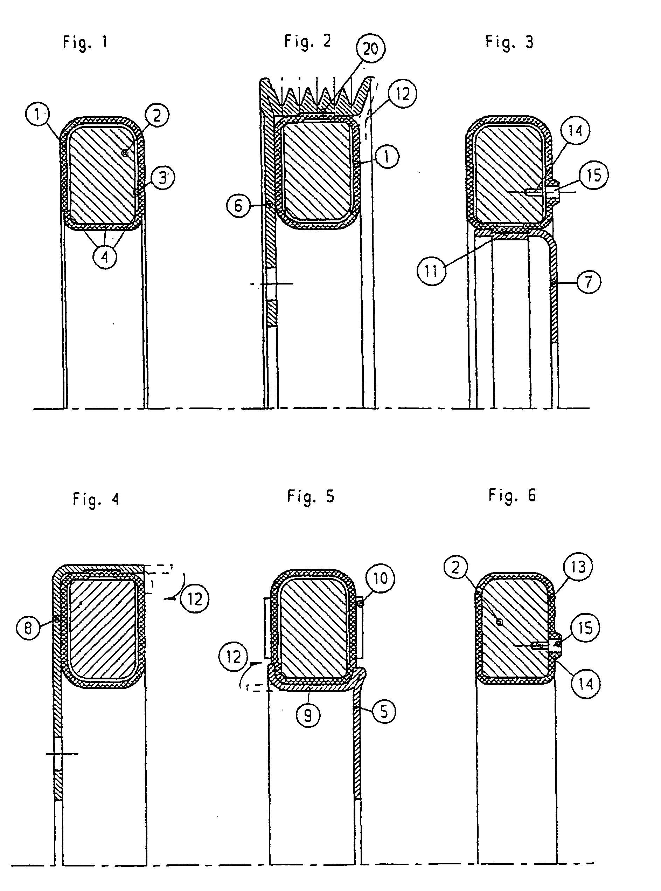

Zunächst sei das Ausführungsbeispiel der Fig. 1 beschrieben. Ein Viskositäts-Drehschwingungsdämpfer weist ein Gehäuse 1 auf, welches eine ringförmige Arbeitskammer umschließt. In der Arbeitskammer ist ein seismischer Ring 2 angeordnet, der Drehbewegungen relativ zum Gehäuse 1 ausführen kann. Ein Spalt 3 zwischen Gehäuse 1 und Ring 2 ist mit einem viskosen Dämpfungsmittel gefüllt. Das Gehäuse 1 ist nach einer Grundidee der Erfindung aus einem thermoplastischen, gleitfähigen Kunststoff, vorzugsweise aus glasfaserverstärktem oder unverstärktem Polyamid (PA) oder Polybutylenterephthalat (PBT), gefertigt.

Der seismische Ring 2 gleitet ohne dazwischenliegende Lagerelemente an entsprechenden Innen-Lagerflächen 4 des Gehäuses 1. Nach den Varianten der Fig. 1 bis 6 und 12 umschließt das Gehäuse 1 den seismischen Ring einteilig, wobei es an einem Trägerelement, vorzugsweise einer Riemenscheibe 6 (siehe Fig. 2), einer Nabe 7 (siehe Fig. 3) oder einer Kappe 8 (siehe Fig. 4) angebracht ist. In Fig. 5 sind zur Verbesserung der Wärmeabfuhr Lüfterflügel 10 vorgesehen.

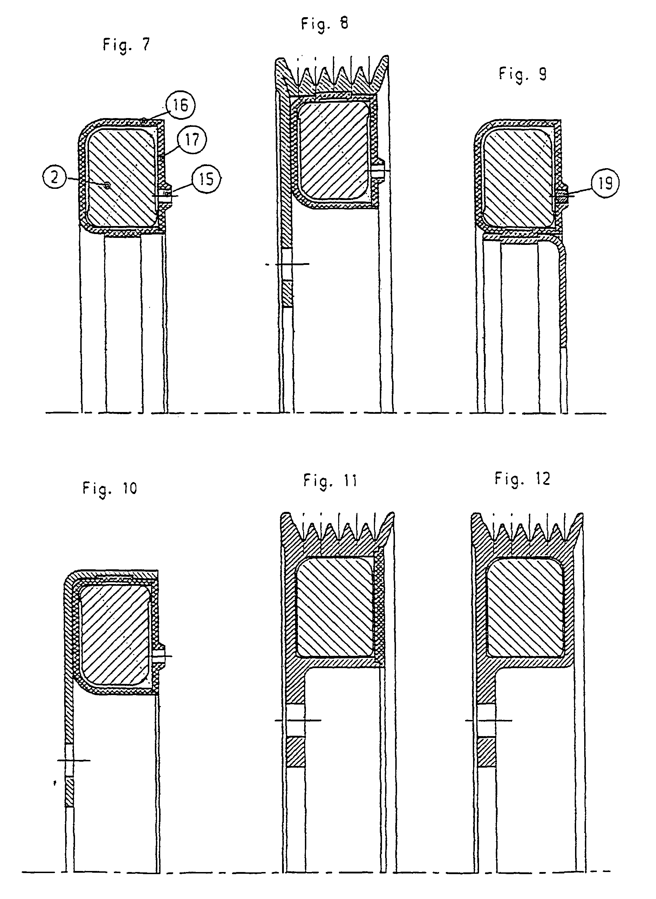

Die Fig. 7 bis 11 zeigen weitere erfindungsgemäße Varianten, bei welchen das Gehäuse 1 den seismischen Ring 2 zwei- oder mehrteilig umfaßt (siehe Gehäusekammer 16 nebst Deckel 17). Auch hierbei ist die Anordnung an den Trägerelementen Riemenscheibe 6 (Fig. 8), Nabe 7 (Fig. 9) oder Kappe 8 (Fig. 10) realisierbar - sogar derart, daß das Trägerelement als integraler Bestandteil des thermoplastischen Gehäuses 1 ausgebildet wird (einstückige Auslegung - Fig. 11, 12; in Fig. 12 bei einstückigem Gehäuse ohne Deckel).

Nach Fig. 5 wird das Gehäuse auf einfache Weise über eine Klebeverbindung 9 und/oder nach Fig. 3 über eine Klipsverbindung 11 am Trägerelement befestigt. Zur besseren axialen Fixierung des Gehäuses 1 am Trägerelement sind zusätzliche Führungselemente 12 vorteilhaft (siehe Fig. 2, 4 und 5).

Bei Verwendung eines einteilig ausgebildeten Gehäuses läßt sich ein Viskositäts-Drehschwingsdämpfer aus nur zwei Teilen herstellen (Gehäuse und Ring, siehe z.B. Fig. 12). Ein Trägerelement aus metallischem Werkstoff ist aus Festigkeitsgründen für die Aufnahme des Gehäuses 1 und für die Befestigung an der Kurbelwelle vorteilhaft, ggf. sogar notwendig (je nach Leistungsanforderung).

Nach dem erfindungsgemäßen Herstellverfahren wird das Ringelement 2 mit wenigstens einem Mantelelement 13 aus thermoplastischem Kunststoff umgeben und zwischen Ringelement und Mantelelement ein viskoses Dämpfungsmittel eingebracht - insbesondere eingepreßt, wobei sich der Spalt 3 bildet. Zur Bildung des Gehäuses 1 wird der Kunststoffmantel 13 auf einen fertigbearbeiteten Stahl- oder Gußring 2 aufgebracht, insbesondere durch Spritzgießen, wobei in die Ummantelung beim Spritzgießen Öffnungen 15 zum Einspritzen des Dämpfungsmediums eingebracht werden.

Die Geometrie des Spaltes 3 wird dadurch gebildet, daß der kunststoffummantelte Ring (siehe Fig. 6) in eine Form eingelegt wird und über die Füllöffnungen 15 Silikonöl oder Luft eingepreßt wird, so daß sich der Kunststoffmantel 13 ausdehnt, bis er an der umgebenden Form anliegt. Dabei wird der Ring 2 über Aufnahmebohrungen 14 in der Form gehalten.

Vor dem Dehnprozeß wird der kunststoffummantelte Ring 2 in der Form erwärmt, um die Fließeigenschaften des Kunststoffes zu verbessern. Ergänzend wird über einen Dehnvorgang in der Kunststoffummantelung eine form- und kraftschlüssige Verbindung 20 zum Trägerelement ausgebildet (Vorsprung und Einkerbung).

Nach dem Einfüllen des Dämpfüngsmittels werdem die Füllbohrungen durch ein Ventil oder eine Kugel 19 (siehe Fig. 9) verschlossen.

Das Gehäuse 1 mit Ring 2 wird am Trägerelement entweder formschlüssig über eine Klipsverbindung 11 oder kraftschlüssig über eine Klebeverbindung 9 angebracht. Dabei wird die Montageverbindung so gestaltet, daß die radiale Lagerfläche des seismischen Ringes 2 unmittelbar am Trägerelement angeordnet ist, z. B. bei Einsatz der Nabe am Innendurchmesser des Ringes 2 oder bei Einsatz der Riemenscheibe am Außendurchmesser des Ringes 2. Damit läßt sich vermeiden, daß die unterschiedlichen Wärmeausdehnungen zwischen dem Kunststoff und dem vorzugsweise metallischen Trägerelement zu großen Toleranzen im Radiallagerspalt führen. Durch die Verstärkung mit Glasfasern oder anderen Beimengungen wird eine Senkung der Wärmeausdehunung des Kunststoffes möglich. Andererseits kann über das Anformen der Lüfterflügel 10 die Wärmeabfuhr des Dämpfers verbessert werden.

Sofern die Klebe- bzw. Klipsverbindung für die axiale Sicherung nicht ausreicht, können am Trägerelement die zusätzlichen Führungselemente angebracht oder angeformt werden.

### Bezugszeichenliste

- Gehäuse: 1
- seismischer Ring: 2
- Spalt: 3
- Lagerflächen: 4
- Riemenscheibe: 6
- Nabe: 7
- Kappe: 8
- Klebeverbindung: 9
- Lüfterflügel: 10
- Klipsverbindung: 11
- Führungselemente: 12
- Kunststoffmantel: 13
- Aufnahmebohrungen: 14
- Öffnungen: 15
- Gehäusekammer: 16
- Deckel: 17
- Kugel: 19
- Verbindung: 20

## Patentansprüche

1. Viskositäts-Drehschwingungsdämpfer, der folgendes aufweist:
a) ein Gehäuse (1) aus Kunststoff, das eine ringförmige Arbeitskammer umschließt,
b) einen seismischen Ring (2), der in der Arbeitskammer relativ zum Gehäuse drehbar angeordnet ist,
c) einen Spalt (3) zwischen Gehäuse (1) und Ring (2), der mit einem viskosen Dämpfungsmittel gefüllt ist,
dadurch gekennzeichnet, daß
d) der Kunststoff thermoplastisch und gleitfähig ist.

2. Drehschwingungsdämpfer nach Anspruch 1, dadurch gekennzeichnet, daß der thermoplastische und gleitfähige Kunststoff glasfaserverstärktes oder erstärktes Polyamid (PA) oder Polybutylenterephthalat (PBT) ist.

3. Viskositäts-Drehschwingungsdämpfer nach den Ansprüchen 1 und 2, dadurch gekennzeichnet, daß das Gehäuse (1) den seismischen Ring einteilig umschließt und an einem Trägerelement, vorzugsweise einer Riemenscheibe (6), einer Nabe (7) oder einer Kappe (8) angeordnet ist.

4. Viskositäts-Drehschwingungsdämpfer nach den Ansprüchen 1 und 2, dadurch gekennzeichnet, daß das den seismischen Ring umschliessende Gehäuse mehrteilig (16, 17) ausgebildet ist und an einem Trägerelement, vorzugsweise einer Riemenscheibe (6), einer Nabe (7) und/oder einer Kappe (8) angeordnet ist.

5. Viskositäts-Drehschwingungsdämpfer nach den Ansprüchen 3 und 4, dadurch gekennzeichnet, daß das Trägerelement ein integraler Bestandteil des thermoplastischen Gehäuses ist.

6. Viskositäts-Drehschwingungsdämpfer nach einem der vorstehenden Ansprüche, gekennzeichnet durch angeformte Lüfterflügel (10).

7. Viskositäts-Drehschwingungsdämpfer nach einem der vorstehenden Ansprüche,
dadurch gekennzeichnet, daß das Gehäuse über eine Klebeverbindung (9) und/oder eine Klipsverbindung (11) am Trägerelement befestigt ist.

8. Viskositäts-Drehschwingungsdämpfer nach einem der vorstehenden Ansprüche,
dadurch gekennzeichnet, daß zur axialen Fixierung des Gehäuses am Trägerelement zusätzliche Führungselemente (12) angeordnet sind.

9. Verfahren zur Herstellung eines Viskositäts-Drehschwingungdämpfers mit einem Kunststoffgehäuse, wobei
a) ein Ringelement (2) mit wenigstens einem Mantelelement (1) - insbesondere aus thermoplastischem Kunststoff- umgeben wird, und
b) zwischen Ringelement (2) und Mantelelement (1) ein viskoses Dämpfungsmittel eingebracht - insbesondere eingepreßt wird,
**dadurch gekennzeichnet, daß**
c) die Spaltgeometrie (3) hergestellt wird, indem der kunststoffummantelte Ring in eine Form eingelegt und über die Füllöffnungen (15) Silikonöl oder Luft eingepreßt werden, so daß sich der Kunststoffmantel (13) ausdehnt, bis er an der umgebenden Form anliegt.

10. Verfahren nach Anspruch 9, dadurch gekennzeichnet, daß zur Bildung des Gehäuses (1) ein Kunststoffmantel (13) auf den vorab fertigbearbeiteten Stahloder Gußring (2) aufgebracht wird.

11. Verfahren nach Anspruch 10, dadurch gekennzeichnet, daß die Kunststoffummantelung (13) durch Spritzgießen aufgebracht wird.

12. Verfahren nach Anspruch 9, 10 oder 11, dadurch gekennzeichnet, daß in den Ring mindestens zwei Bohrungen (14) zur Aufnahme in der Spritzgießform eingebracht sind.

13. Verfahren nach einem der Ansprüche 9 bis 12, dadurch gekennzeichnet, daß in die Ummantelung zum Einspritzen des Dämpfungsmediums Öffnungen (15) eingebracht werden.

14. Verfahren nach einem der Ansprüche 9 bis 13, dadurch gekennzeichnet, daß der Ring (2) über die Aufnahmebohrungen (14) durch die Füllöffnungen (15) in der Form gehalten werden.

15. Verfahren nach einem der Ansprüche 9 bis 14, dadurch gekennzeichnet, daß der kunststoffummantelte Ring (2) vor dem Dehnprozeß in der Form erwärmt wird, um die Fließeigenschaften des Kunststoffes zu verbessern.

16. Verfahren nach einem der Ansprüche 9 bis 15, dadurch gekennzeichnet, daß über die Dehnung der Kunststoffummantelung eine form- und kraftschlüssige Verbindung (20) zu einem Trägerelement, vorzugsweise zu einer Riemenscheibe (6), Nabe (7) oder Kappe (8) hergestellt wird.

17. Verfahren nach einem der Ansprüche 9 bis 16, dadurch gekennzeichnet, daß nach dem Einfüllen des Dämpfungsmittels die Füllbohrungen durch ein Ventil oder eine Kugel (19) verschlossen werden.

## Claims

1. Viscosity-type torsional-vibration damper having the following:
a) a plastic housing (1) which encloses an annular working chamber,
b) a seismic ring (2) which is arranged in the working chamber rotatably relatively to the housing,
c) a gap (3) between the housing (1) and the ring (2) which is filled with a viscous damping agent,
characterised in that
d) the plastics material is thermoplastic and slidable.

2. Torsional-vibration damper according to claim 1,
characterised in that the thermoplastic, slidable plastics material is glass-fibre-reinforced, or strengthened, polyamide (PA) or polybutylene terephthalate (PBT).

3. Viscosity-type torsional-vibration damper according to claims 1 and 2, characterised in that the housing (1) is in one piece enclosing the seismic ring and is arranged on a carrier element, preferably a belt pulley (6), a hub (7) or a cap (8).

4. Viscosity-type torsional-vibration damper according to claims 1 and 2, characterised in that the housing enclosing the seismic ring is constructed in more than one part (16, 17) and is arranged on a carrier element, preferably a belt pulley (6), a hub (7) and/or a cap (8).

5. Viscosity-type torsional-vibration damper according to claims 3 and 4, characterised in that the carrier element is an integral component of the thermoplastic housing.

6. Viscosity-type torsional-vibration damper according to one of the preceding claims, characterised by having fan blades (10) formed on it.

7. Viscosity-type torsional-vibration damper according to one of the preceding claims, characterised in that the housing is secured to the carrier element by means of an adhesive joint (9) and/or a clip connection (11).

8. Viscosity-type torsional-vibration damper according to one of the preceding claims, characterised in that additional guide elements (12) are arranged for the axial fixing of the housing on the carrier element.

9. Process for the production of a viscosity-type torsional-vibration damper having a plastic housing, wherein
a) a ring element (2) is enclosed by at least one casing element (1), made in particular of thermoplastic plastics material, and
b) a viscous damping agent is placed, in particular pressed in, between the ring element (2) and the casing element (1),
characterised in that
c) the gap geometry (3) is produced, with the plastic-enclosed ring being introduced into a mould, and silicon oil or air being squeezed through the filling apertures (15) so that the plastic casing (13) stretches until it abuts the surrounding mould.

10. Process according to claim 9, characterised in that a plastic casing (13) is applied to the previously finished steel or cast iron ring to form the housing (1).

11. Process according to claim 10, characterised in that the plastic casing (13) is applied by injection moulding.

12. Process according to claim 9, 10 or 11,
characterised in that at least two bores (14) are introduced into the ring for reception in the injection mould.

13. Process according to one of claims 9 to 12,
characterised in that apertures (15) are introduced into the casing for injecting the damping medium.

14. Process according to one of claims 9 to 13,
characterised in that the ring (2) is held in the mould by means of the receiving bores (14) through the filling apertures (15).

15. Process according to one of claims 9 to 14,
characterised in that the plastic-encased ring (2) is heated before the stretching process in the mould so as to improve the flow characteristics of the plastic material.

16. Process according to one of claims 9 to 15,
characterised in that a positively-engaging and interference connection (2) to a carrier element, preferably a belt pulley (6), hub (7) or cap (8) is produced by stretching of the plastic casing.

17. Process according to one of claims 9 to 16,
characterised in that after pouring in the damping agent the filling bores are closed by a valve or a ball (19).

## Revendications

1. Amortisseur visqueux de vibration de torsion, qui comporte ce qui suit :
a) un corps (1) en matière plastique, qui enferme une chambre de travail annulaire,
b) un anneau (2) sismique, qui est monté tournant par rapport au corps dans la chambre de travail,
c) un intervalle (3) entre le corps (1) et l'anneau (2), qui est empli d'un agent visqueux d'amortissement,
caractérisé en ce que
d) la matière plastique est thermoplastique et susceptible de glisser.

2. Amortisseur visqueux de vibration de torsion suivant la revendication 1, caractérisé en ce que la matière plastique thermoplastique et susceptible de glisser est du polyamide (PA) ou du poly(téréphtalate de butylène) (PBT) raffermi ou renforcé par de la fibre de verre.

3. Amortisseur visqueux de vibration de torsion suivant les revendications 1 et 2, caractérisé en ce que le corps (1) entoure d'une seule pièce l'anneau sismique et est monté sur un élément support, de préférence sur une poulie (6), un moyeu (7) ou un chapeau (8).

4. Amortisseur visqueux de vibration de torsion suivant les revendications 1 et 2, caractérisé en ce que le corps entourant l'anneau sismique est constitué en plusieurs parties (16, 17) et est monté sur un élément support, de préférence une poulie (6), un moyeu (7) ou un chapeau (8).

5. Amortisseur visqueux de vibration de torsion suivant les revendications 3 et 4, caractérisé en ce que l'élément support fait partie intégrante du corps thermoplastique.

6. Amortisseur visqueux de vibration de torsion suivant l'une des revendications précédentes, caractérisé en ce qu'il comporte d'une seule pièce des ailettes (10) d'aération.

7. Amortisseur visqueux de vibration de torsion suivant l'une des revendications précédentes, caractérisé en ce que le corps est fixé à l'élément support par un joint collé (9) et/ou par un clipsage (11).

8. Amortisseur visqueux de vibration de torsion suivant l'une des revendications précédentes, caractérisé en ce que, pour l'immobilisation axiale du corps sur l'élément support, il est prévu des éléments (12) supplémentaires de guidage.

9. Procédé de fabrication d'un amortisseur visqueux de vibration de torsion ayant un corps en matière plastique, dans lequel :
a) un élément annulaire (2) est entouré d'au moins un élément (1) d'enveloppe, notamment en thermoplastique et
b) il est introduit, et notamment refoulé, entre l'élément (2) annulaire et l'élément (1) d'enveloppe, un agent visqueux d'amortissement,
caractérisé en ce que
c) la géométrie (3) de l'intervalle est obtenue en plaçant l'anneau enveloppé de matière plastique dans un moule et en introduisant par les orifices (15) de remplissage de l'huile de silicone ou de l'air, de sorte que l'enveloppe (13) en matière plastique se dilate jusqu'à s'appliquer au moule qui l'entoure.

10. Procédé suivant la revendication 9, caractérisé en ce que pour former le corps (1) il est appliqué une enveloppe (13) en matière plastique sur l'anneau (2) en acier ou en fonte préalablement fini d'usinage.

11. Procédé suivant la revendication 9, caractérisé en ce que l'enveloppe (13) en matière plastique est déposée par moulage par injection.

12. Procédé suivant la revendication 9, 10 ou 11, caractérisé en ce qu'il est ménagé dans l'anneau au moins deux trous (14) pour la réception dans le moule de moulage par injection.

13. Procédé suivant l'une des revendications 9 à 12, caractérisé en ce qu'il est ménagé dans l'enveloppe des ouvertures (15) pour l'injection de l'agent d'amortissement.

14. Procédé suivant l'une des revendications 9 à 13, caractérisé en ce que l'anneau (2) est maintenu dans le moule au-dessus des trous (14) de réception par les ouvertures (15) de remplissage.

15. Procédé suivant l'une des revendications 9 à 14, caractérisé en ce que l'anneau (2) enveloppé de matière plastique est réchauffé dans le moule avant l'opération de dilatation pour améliorer les propriétés d'écoulement de la matière plastique.

16. Procédé suivant l'une des revendications 9 à 15, caractérisé en ce qu'il est préparé par la dilatation de l'enveloppe en matière plastique une liaison (20) par complémentarité de formes et par coopération de force avec un élément support, de préférence avec une poulie (6), un moyeu (7) ou un chapeau (8).

17. Procédé suivant l'une des revendications 9 à 16, caractérisé en ce qu'après le remplissage par l'agent d'amortissement, les ouvertures de remplissage sont fermées par une vanne ou par une bille (19).
